# EUROPÄISCHE PATENTANMELDUNG

(11) **EP 0 625 627 A2**
(43) Veröffentlichungstag der Anmeldung: **23.11.1994**
(21) Anmeldenummer: 94107085.6
(22) Anmeldetag: 06.05.1994
(51) Int. Cl.: E06B 9/00, E06B 9/32

(54) **Vorrichtung zur automatischen Steuerung von Antrieben für insbesondere Rolläden, Jalousien o.dgl.**

(30) Priorität: 08.05.1993 DE 4315406
(71) Anmelder: Brabender, Wilhelm, D-50739 Köln (DE)
(72) Erfinder: Brabender, Wilhelm, D-50739 Köln (DE)
(74) Vertreter: Hilleringmann, Jochen, Dipl.-Ing.

(57) **Zusammenfassung**

Die Vorrichtung zur automatischen Steuerung von Antrieben für insbesondere Rolläden, Jalousien o.dgl. ist mit einer Helligkeits-Sensoranordnung (10) versehen, die beim Überschreiten einer einstellbaren ersten Helligkeitsschwelle ein erstes Ausgangssignal und beim Unterschreiten einer einstellbaren zweiten Helligkeitsschwelle ein zweites Ausgangssignal ausgibt. Die Ausgangssignale der Helligkeits-Sensoranordnung (10) werden von einer Schaltzeitenbegrenzungsvorrichtung (20) empfangen. Diese Vorrichtung gibt auf den Empfang eines Ausgangssignals der Helligkeits-Sensoranordnung (10) nur dann ein Ausgangssignal aus, wenn der Empfang außerhalb einer für mindestens ein Ausgangssignal der Helligkeits-Sensoranordnung (10) einstellbaren Sperrzeit und/oder Sperrzeitspanne liegt. Mit der Schaltzeitenbegrenzungsvorrichtung (20) gekoppelt ist mindestens eine Verzögerungsvorrichtung (26) mit einstellbarer Verzögerungszeitspanne, die ihrerseits mit einem zu steuernden Antrieb (28) verbunden ist. Die Verzögerungsvorrichtung (26) erzeugt auf den Empfang des Ausgangssignals der Schaltzeitenbegrenzungsvorrichtung (20) hin um die eingestellte Verzögerungszeitspanne verzögert ein Ansteuerungssignal für den Antrieb (28) zum Auf- oder Herabfahren des Rolladens.

## Beschreibung

Die Erfindung betrifft eine Vorrichtung zur automatischen Steuerung von Antrieben für insbesondere Rolläden, Jalousien o.dgl.

Automatisch arbeitende Steuerungsvorrichtungen für Rolläden oder Jalousien sind im Stand der Technik bekannt. Unter anderem gehören zum Stand der Technik Rolladensteuerungen, die ein automatisches Hochfahren des Rolladens am Morgen und ein automatisches Herunterfahren des Rolladens am Abend ermöglichen. Diese Rolladensteuerung ist mit einem werkseitig programmierten Speicher versehen, in dem die Sonnenaufgangs- und Sonnenuntergangszeitpunkte für das ganze Jahr (in wöchentlichen Schritten) gespeichert sind ("Astroprogramm" mit Jahreszeitschaltuhr und "Astrokalender"). Zusätzlich dazu ist diese bekannte Steuerung mit einem Sperrzeitengeber versehen, mit dem vom Benutzer individuell eine Sperrzeit vorgebbar ist, vor der ein automatisches Hochfahren des Rolladens in jedem Fall ausgeschlossen werden soll. Damit wird erreicht, daß auch an denjenigen Tagen, an denen der Sonnenaufgang vor der Sperrzeit liegt, der Rolladen erst nach der Sperrzeit, z.B. nach 6.00 Uhr morgens hochfährt. Der Astrokalender ist auf lediglich einen Ort innerhalb einer Region ausgerichtet (für das gesamte Gebiet der Bundesrepublik Deutschland ist dies Kassel). An anderen Orten, die um einige Breitengrade von dem besagten Ort entfernt liegen, stimmen die gespeicherten Sonnenaufgangs- und Sonnenuntergangsdaten mit den für diesen anderen Ort geltenden Daten nicht überein. Die Abweichungen vergrößern sich von Wochentag zu Wochentag, da die Daten lediglich wochenweise abgelegt sind. Das bekannte Steuerungssystem ist um einen Sonnensensor erweiterbar, der das automatische Herunterfahren des Rolladens bei zu starker Sonneneinstrahlung ermöglicht. Der Sonnensensor wird an der Fensterscheibe angebracht und der Rolladen fährt bei Steuerung durch den Sonnensensor bis zu diesem herunter. Sobald die voreingestellte Helligkeitsschwelle des Sonnensensors für die Dauer einer bestimmten Zeitspanne unterschritten ist, fährt der Rolladen automatisch wieder hoch.

Ein weiteres bekanntes Steuerungssystem für einen Rolladen ist mit einem Dämmerungssensor versehen, der an der Scheibe angebracht wird und das automatische Herunterfahren des Rolladens am Abend erlaubt. Dieser Dämmerungssteuerung überlagert ist wiederum eine Zeitsteuerung. Auch wenn am Abend der durch die Zeitsteuerung vorgegebene Zeitpunkt zum Herunterfahren des Rolladens erreicht ist, wird der Rolladenantrieb erst dann angesteuert, wenn der Dämmerungssensor angesprochen hat. In jedem Fall erfolgt jedoch das Hochfahren des Rolladens am Morgen zeitgesteuert.

Bei beiden oben beschriebenen bekannten Steuerungssystemen muß pro zu steuerndem Rolladen ein komplettes Steuerungssystem mit Zeitschaltuhr für die Zeitsteuerung und gegebenenfalls Sensor für die Helligkeitssteuerung eingesetzt werden. Damit sind die bekannten Systeme recht teuer, wenn mehrere Rolläden automatisch gesteuert werden sollen.

Aus DE-AS 24 05 350 ist eine Steuerung für Sonnenschutzanlagen bekannt, die helligheitsabhängig erfolgt. Schaltuhren geben die Sonnenschutzanlage für die verschiedenen Gebäudefassaden zu unterschiedlichen Tageszeiten frei bzw. unterdrücken den automatischen Betrieb innerhalb jeweiliger Sperrzeitspannen. Zur Unterdrückung einer zu direkt der Tageslicht-Helligkeit folgenden Einstellung der Sonnenschutzanlage ist eine Filterung bzw. Glättung des zeitlichen Verlaufs der Ansteuersignale für die Antriebe vorgesehen.

Aus dem Prospekt der Fa. Rademacher Geräte Elektronic GmbH & Co. KG "Rollotron von Rademacher" ausgegeben auf der Heim und Handwerk in München vom 30. November bis 8. Dezember 1991 ist eine Dämmerungssteuerung für Rolläden bekannt, bei der die Rolläden automatisch bei eintretender Dämmerung in Kombination mit einer programmierten Schließ-Zeit schließen. Die gewünschte Dämmerung wird über ein Potentiometer eingestellt und über einen Lichtleiter gemessen. Das Öffnen der Rolläden erfolgt ausschließlich über die eingestellte Zeit. Diese Rolladensteuerung kann um einen Sonnensensor ergänzt werden, der tagsüber ab einer bestimmten einstellbaren Mindesthelligkeit den Rolladen zum Schutz von Blumen, Möbeln, Teppichen und Vorhängen vor zu intensiver Sonneneinstrahlung herunterfährt. Das Hochfahren erfolgt nach Ablauf einer vorgebbaren Zeitspanne, sofern für die Dauer dieser Zeitspanne die Strahlungsintensität wieder unterhalb der Vorgabe liegt.

Der Erfindung liegt die Aufgabe zugrunde, eine automatische Steuerung für die Antriebe von insbesondere Rolläden, Jalousien o.dgl. zu schaffen, die bei minimalem Aufwand an Bedienung einen maximalen Komfort ermöglichen und die Öffnungs- und Schließzeiten für die Rolläden den Sonnenaufgangs- und Sonnenuntergangszeiten exakt folgen läßt, wobei Helligkeitsunterschiede zwischen klaren und bewölkten Tagen berücksichtigt werden.

Zur Lösung dieser Aufgabe wird mit der Erfindung eine Vorrichtung zur automatischen Steuerung von Antrieben für insbesondere Rolläden, Jalousien o.dgl. vorgeschlagen, die versehen ist mit:
- einer Helligkeits-Sensoranordnung, die beim Überschreiten einer einstellbaren ersten Helligkeitsschwelle ein erstes Ausgangssignal und beim Unterschreiten einer einstellbaren zweiten Helligkeitsschwelle ein zweites Ausgangssignal ausgibt,
- einer die Ausgangssignale der Helligkeits-Sensoranordnung empfangenden Schaltzeitenbegrenzungsvorrichtung, an der für mindestens ein Ausgangssignal der Helligkeits-Sensoranordnung eine zyklische Sperrzeit und eine wiederholt ablaufende Sperrzeitspanne einstellbar sind, wobei die Schaltzeitenbegrenzungsvorrichtung auf den nach Ablauf der vorherigen Sperrzeitspanne zeitlich ersten Empfang des ersten und/oder des zweiten Ausgangssignals der Helligkeits-Sensoranordnung hin einmalig ein Ausgangssignal erzeugt, und zwar zeitlich nach der Sperrzeit, und wobei das Ausgangssignal der Schaltzeitenbegrenzungsvorrichtung danach bis zum Ablauf der mit dem zeitlich ersten Empfang des ersten und/ oder des zweiten Ausgangssignals der Helligkeits-Sensoranordnung beginnenden Sperrzeitspanne unterdrückt ist, und
- mindestens einer das Ausgangssignal der Schaltzeitenbegrenzungsvorrichtung empfangenden Verzögerungsvorrichtung mit einstellbarer Verzögerungszeitspanne, die ihrerseits mit einem zu steuernden Antrieb verbunden ist, wobei die Verzögerungsvorrichtung auf den Empfang des Ausgangssignals der Schaltzeitenbegrenzungsvorrichtung hin um die eingestellte Verzögerungszeitspanne zeitlich verzögert ein Ansteuerungssignal für den Antrieb ausgibt.

Die erfindungsgemäße Vorrichtung wird gesteuert unter anderem in Abhängigkeit von einer Helligkeits-Sensoranordnung, die in Abhängigkeit vom Überschreiten bzw. Unterschreiten zweier individuell einstellbarer Helligkeitsschwellen arbeitet. Die Sensoranordnung gibt ein erstes Ausgangssignal aus, wenn die einstellbare erste Helligkeitsschwelle überschritten wird. Ferner gibt die Sensoranordnung beim Unterschreiten der einstellbaren zweiten Helligkeitsschwelle ein zweites Ausgangssignal aus. Mit anderen Worten handelt es sich bei der Helligkeits-Sensoranordnung um eine Art Fensterdiskriminator, der ein Ausgangssignal liefert, wenn die sensierten Helligkeitswerte außerhalb des durch die beiden Helligkeitsschwellen bestimmten Fensterbereichs liegen. Die Helligkeits-Sensoranordnung wird dem Tageslicht ausgesetzt angeordnet und gibt beim Überschreiten einer durch die erste Helligkeitsschwelle vorgegebenen Morgendämmerung das erste Ausgangssignal und beim Unterschreiten einer durch die zweite Helligkeitsschwelle vorgegebenen Abenddämmerung das zweite Ausgangssignal aus. Die Helligkeits-Sensoranordnung ist mit einer Schaltzeitenbegrenzungsvorrichtung gekoppelt, die die Ausgangssignale der Helligkeits-Sensoranordnung empfängt. Die Schaltzeitenbegrenzungsvorrichtung hat die Aufgabe, die von der Helligkeits-Sensoranordnung kommenden Ausgangssignale weiterzugeben oder zu sperren. Zu diesem Zweck sind an der Schaltzeitenbegrenzungsvorrichtung mindestens eine Sperrzeit und/oder mindestens eine Sperrzeitspanne einstellbar, und zwar für mindestens eines der beiden Ausgangssignale. Mit der Schaltzeitenbegrenzungsvorrichtung ist es möglich, das betreffende von der Helligkeits-Sensoranordnung kommende Ausgangssignal erst nach Erreichen der eingestellten Sperrzeit weiterzugeben und/oder für die eingestellte Sperrzeitspanne nach erstmaligem Empfang des betreffenden Ausgangssignals weitere erste Ausgangssignale zu unterdrücken. Beispielsweise soll in Sommermonaten ein allzu frühes Hochfahren der Rolläden verhindert werden. An der Schaltzeitenbegrenzungsvorrichtung kann dementsprechend eine Sperrzeit, beispielsweise 6.00 Uhr morgens eingestellt werden. Auch wenn die Helligkeits-Sensoranordnung wegen Überschreitens der ersten Helligkeitsschwelle vor 6.00 Uhr morgens das erste Ausgangssignal ausgibt, wird das Ausgangssignal der Schaltzeitenbegrenzungsvorrichtung erst um 6.00 Uhr erzeugt. Die (einstellbare) Sperrzeitspanne besagt nun, daß für diese Zeitspanne nach einmaligem Empfang des ersten Ausgangssignals trotz weiterhin anstehendem ersten Ausgangssignal oder trotz danach nochmals erfolgendem Empfang des ersten Ausgangssignals die Erzeugung eines Ausgangssignals durch die Schaltzeitenbegrenzungsvorrichtung unterbunden ist. Die Sperrzeitspanne sollte werkseitig eingestellt sein und bei etwa 23 bis 23,5 Stunden liegen, um sicherzustellen, daß der nächste Empfang des ersten (zweiten) Ausgangssignals tatsächlich auf die Helligkeitsüberschreitung (Helligkeitsunterschreitung) der ersten Helligkeitsschwelle (der zweiten Helligkeitsschwelle) aufgrund der Morgendämmerung (Abenddämmerung) am folgenden Tag zurückzuführen ist. Dementsprechend können auch für das zweite Ausgangssignal Sperrzeiten und Sperrzeitspannen vorgegeben werden.

Aufgrund der Möglichkeit, Sperrzeiten und Sperrzeitspannen vorgeben zu können, wird ein kurzzeitiges Überschreiten der ersten Helligkeitsschwelle und ein kurzzeitiges Unterschreiten der zweiten Helligkeitsschwelle vom Steuerungssystem unterdrückt. Dies ist von Vorteil, wenn man einmal berücksichtigt, daß das Tageslicht aufgrund beispielsweise eines aufziehenden Gewitters kurzzeitig unter den voreingestellten Wert für die Abenddämmerung (zweite Helligkeitsschwelle) abfällt oder während der Nacht durch beispielsweise Gewitterblitze kurzzeitig über den voreingestellten Wert für die Morgendämmerung (erste Helligkeitsschwelle) ansteigt. Weiterhin ist in diesem Zusammenhang als Vorteil zu erwähnen, daß das Steuerungssystem vor Manipulationen von außen geschützt ist, indem nämlich während der Nacht eine Beleuchtung der Helligkeits-Sensoranordnung durch eine Taschenlampe nicht zu einem selbsttätigen Hochfahren der Rolläden führt. Das mit den nach der Erfindung gesteuerten Rolläden versehene Haus ist also insoweit geschützt.

Um nun die Hoch- und Herunterfahrzeitpunkte der einzelnen Rolläden eines Gebäudes individuell einstellen zu können, ist pro zu steuerndem Rolladen eine Verzögerungsvorrichtung vorgesehen, die das Ausgangssignal der Schaltzeitenbegrenzungsvorrichtung empfängt. An der Verzögerungsvorrichtung läßt sich mindestens eine Verzögerungszeitspanne einstellen, die bewirkt, daß die Verzögerungsvorrichtung ihr Ansteuerungssignal für den Rolladenantrieb erst dann ausgibt, wenn nach Empfang des Ausgangssignals der Zeitschaltenbegrenzungsvorrichtung die voreingestellte Verzögerungszeitspanne verstrichen ist. Die Verzögerungszeitspannen, um die das Hochfahren und das Herunterfahren des mit der Verzögerungsvorrichtung gekoppelten Rolladens verzögert werden, können auf unterschiedliche Werte eingestellt werden. Insbesondere ist es aufgrund der für jeden Rolladen eines Hauses individuell einstellbaren Verzögerungszeitspanne möglich, beispielsweise den Rolladen für die Balkon- und/ oder Terrassentür abends als letzten herunterzufahren, um noch auf dem Balkon oder der Terrasse befindlichen Personen die Möglichkeit zu geben, entweder vor dem Schließen des Rolladens noch ins Haus zu gehen oder rechtzeitig noch in den automatischen Betrieb einzugreifen, was selbstverständlich nach dem erfindungsgemäßen Steuerungskonzept jederzeit möglich ist.

Das erfindungsgemäße Steuerungssystem zeichnet sich durch einen hohen Bedienungskomfort aus, da sich das Bedienungserfordernis lediglich auf das Ein- und Ausschalten der Automatik beschränkt, wenn das Steuerungssystem einmal auf die individuellen Anforderungen des Nutzers eingestellt ist. Bei dem erfindungsgemäßen Steuerungssystem folgen die Öffnungs- und Schließzeiten für die Rolläden den Sonnenaufgangs- und den Sonnenuntergangszeiten exakt nach, wobei Helligkeitsunterschiede zwischen klaren und bewölkten Tagen berücksichtigt werden. Das erfindungsgemäße Steuerungssystem benötigt lediglich eine einzige Helligkeits-Sensoranordnung, die an zentraler Stelle an der Außenwand der mit den Automatik-Rolläden versehenen Gebäudes angebracht wird. Durch das unterschiedliche Schließen und Öffnen der einzelnen Rolläden und die exakte Anpassung an den Sonnenaufgang und den Sonnenuntergang sind die Betätigungszeiten derart unterschiedlich, daß z.B. die Abwesenheit der Bewohner über längere Zeit kaum beobachtbar ist. Mit dem erfindungsgemäßen Steuerungssystem lassen sich auch beispielsweise Mehrfamilienhäuser ausstatten, da die Möglichkeit der Verzögerung der Schaltzeiten an den einzelnen Verzögerungsvorrichtungen genügend Spielraum für die individuellen Ansprüche zuläßt, die einzelnen Bewohner des Mehrfamilienhauses bezüglich der Rolläden der von ihnen bewohnten Wohnungen stellen.

In vorteilhafter Weiterbildung der Erfindung ist vorgesehen, daß die Helligkeits-Sensoranordnung einen ersten Sensor und einen zweiten Sensor aufweist, wobei der erste Sensor beim Überschreiten der ersten Helligkeitsschwelle anspricht und das erste Ausgangssignal ausgibt und der zweite Sensor beim Überschreiten der zweiten Helligkeitsschwelle anspricht und das zweite Ausgangssignal ausgibt. Der erste Sensor könnte also als Morgendämmerungssensor bezeichnet werden, während es sich bei dem zweiten Sensor um den Abenddämmerungssensor handelt. Grundsätzlich spielt es keine Rolle, ob die Helligkeits-Sensoranordnung ihre Ausgangssignale (bei Über- bzw. Unterschreitung der jeweiligen Helligkeitsschwellen) ständig ausgibt oder lediglich impulsförmig. Die Weiterverarbeitung der Ausgangssignale erfolgt in jedem Fall in der Schaltzeitenbegrenzungsvorrichtung, die vorteilhafterweise mit einem Zähler oder Speicher ausgestattet ist, um zur Unterdrückung der Ausgangssignale für die Dauer der eingestellten Sperrzeitspannen festhalten zu können, daß das betreffende Ausgangssignal bereits einmal empfangen worden ist.

Von Vorteil ist ferner, wenn, falls erforderlich, die Helligkeits-Sensoranordnung und die damit über Kabel verbundene Schaltzeitenbegrenzungsvorrichtung von einer Solarzelle gespeist werden. Damit ist man insofern von der Zuführung externer elektrischer (Netz-Energie) durch Kabel u.dgl. unabhängig und das Steuerungssystem arbeitet auch bei einem (kurzzeitigen) Netz-Spannungsausfall.

Wie sich aus der obigen Beschreibung ergibt, ist die Schaltzeitenbegrenzungsvorrichtung vorteilhafterweise mit einer Schaltuhranordnung versehen, die Sperrzeiten und Sperrzeitspannen vorgibt. Mit der für mindestens eines der beiden Ausgangssignale der Helligkeits-Sensoranordnung vorgebbaren Sperrzeit wird erreicht, daß die Schaltzeitenbegrenzungsvorrichtung ihr Ausgangssignal erst dann erzeugt, wenn das betreffende Ausgangssignal der Helligkeits-Sensoranordnung nach Erreichen der eingestellten Sperrzeit empfangen wird. Mit der für mindestens eines der beiden Ausgangssignale der Helligkeits-Sensoranordnung vorgebbaren Sperrzeitspanne wird hingegen erreicht, daß für die Dauer dieser Sperrzeitspanne die Schaltzeitenbegrenzungsvorrichtung nach erstmaligem Empfang des betreffenden Ausgangssignals der Helligkeits-Sensoranordnung auch bei nochmaligem oder fortdauernden Empfang des betreffenden Ausgangssignals der Helligkeits-Sensoranordnung kein Ausgangssignal seitens der Schaltzeitenbegrenzungsvorrichtung erzeugt wird.

Um den Installationsaufwand des Steuerungssystem so gering wie möglich zu halten, ist es von Vorteil, wenn die Verbindung zwischen der Schaltzeitenbegrenzungsvorrichtung und der mindestens einen Verzögerungsvorrichtung drahtlos ist. Demzufolge ist die Schaltzeitenbegrenzungsvorrichtung mit einer Funksignal-Sendevorrichtung versehen, die ein Funksignal als Ausgangssignal der Schaltzeitenbegrenzungsvorrichtung ausgibt. Pro Verzögerungsvorrichtung ist eine Empfangsvorrichtung vorgesehen, die das Funksignal empfängt. Die Schaltzeitenbegrenzungsvorrichtung gibt das Funksignal aus, wenn die oben im einzelnen angegebenen Bedingungen erfüllt sind. Dieses Funksignal wird an sämtliche Verzögerungsvorrichtungen bzw. an die Empfangsvorrichtungen sämtlicher Verzögerungsvorrichtungen ausgegeben. Der Verdrahtungsaufwand des Steuerungssystems gemäß der hier beschriebenen Weiterbildung der Erfindung beschränkt sich auf eine Kabelverbindung zwischen der Helligkeits-Sensoranordnung und der Schaltzeitenbegrenzungsvorrichtung sowie auf die Anbringung der Helligkeits-Sensoranordnung und den Einbau der Verzögerungs-/Empfangsvorrichtungen. Dabei wird unterstellt, daß elektrische Rolladenantriebe bereits vorhanden sind. Die Verzögerungs-/Empfangsvorrichtungen lassen sich an den Stellen unterbringen, wo die Schalter für die Rolladenantriebe untergebracht sind. Dabei kann es sich um eine zentrale oder um eine dezentrale Anordnung handeln.

Vorteilhafterweise lassen sich pro Verzögerungsvorrichtung mehrere Verzögerungszeitspannen einstellen. Dies ist insbesondere unter dem Aspekt von Vorteil, daß die Reihenfolgen, in der die Rolläden eines Hauses öffnen bzw. schließen, unterschiedlich gewählt werden können. So ist es beispielsweise möglich, den Rolladen für das Kinderzimmer abends früh bzw. früher als die anderen Rolläden herunterzufahren und morgens spät bzw. später als die anderen Rolländen hochzufahren.

Ebenfalls von Vorteil ist es, wenn an der Schaltzeitenbegrenzungsvorrichtung für mindestens eines der beiden Ausgangssignale der Helligkeits-Sensoranordnung mehrere Sperrzeiten und mehrere Sperrzeitspannen einstellbar sind. Damit wird die Möglichkeit geschaffen, beispielsweise am Wochenende die Rolläden erst später hochfahren zu lassen als an Werktagen. Von dieser Variation der Sperrzeiten und Sperrzeitspannen unberührt bleibt die Tatsache, daß die Reihenfolge, in der die Rolläden hoch- und herunterfahren abhängig ist von den jeweils eingestellten Verzögerungszeitspannen. Mit unterschiedlichen Sperrzeiten und Sperrzeitspannen läßt sich lediglich der Zeitpunkt, zu dem die Verzögerungsvorrichtungen für die einzelnen Rolladenantriebe angesprochen werden, unterschiedlich wählen.

Die mindestens eine Verzögerungsvorrichtung kann vorteilhafterweise einen Eingang für einen Sonnensensor aufweisen, der beim Überschreiten einer einstellbaren (dritten) Helligkeitsschwelle ein Ausgangssignal an die Verzögerungsvorrichtung ausgibt, die daraufhin ein Ansteuerungssignal für den Antrieb erzeugt. Damit läßt sich das Schließen des Rolladens bei starker Sonnenbestrahlung regeln, wobei die Ansprechschwelle (dritte Helligkeitsschwelle) für jeden Rolladen individuell vorgegeben werden kann. Bei derartigen sonnensensorgesteuerten Rolläden sollte dafür gesorgt werden, daß es einer Mindestzeit bedarf, für die der Sonnensensor einer stärkeren als durch die dritte Helligkeitsschwelle vorgegebenen Bestrahlung ausgesetzt ist, damit der Rolladen schließt. Umgekehrt sollte vorgesehen sein, daß der Rolladen nicht sofort dann öffnet, wenn diese dritte Helligkeitsschwelle unterschritten wird; auch hier sollte man eine Mindestzeit vorgeben, nach deren Ablauf der Rolladenantrieb zum Hochfahren der Rollade angesteuert wird. Beide Mindestzeitspannen werden vorteilhafterweise im Bereich von Minuten bis einige 10 Minuten liegen. Der Sonnensensor ist z.B. an der dem betreffenden Rolladen zugeordneten Fensterscheibe angeordnet.

Das erfindungsgemäße Steuerungssystem läßt vorteilhafterweise neben der Automatiksteuerung auch eine Steuerung von Hand zu. Zu diesem Zweck ist die Verzögerungsvorrichtung mit Schaltern zum manuell ausgelösten Auf- und Abbewegen des von der Verzögerungsvorrichtung gesteuerten Rolladens versehen. Bei mehreren Verzögerungsvorrichtungen ist damit die Möglichkeit der manuellen Einzelansteuerung der Rolläden gegeben. Zusätzlich kann die Schaltzeitenbegrenzungsvorrichtung mit Schaltern zum Auslösen des Ausgangssignals versehen sein, um sämtliche Verzögerungsvorrichtungen auf manuelle Schalterbetätigung hin anzusprechen und den Automatikmodus auszuschalten.

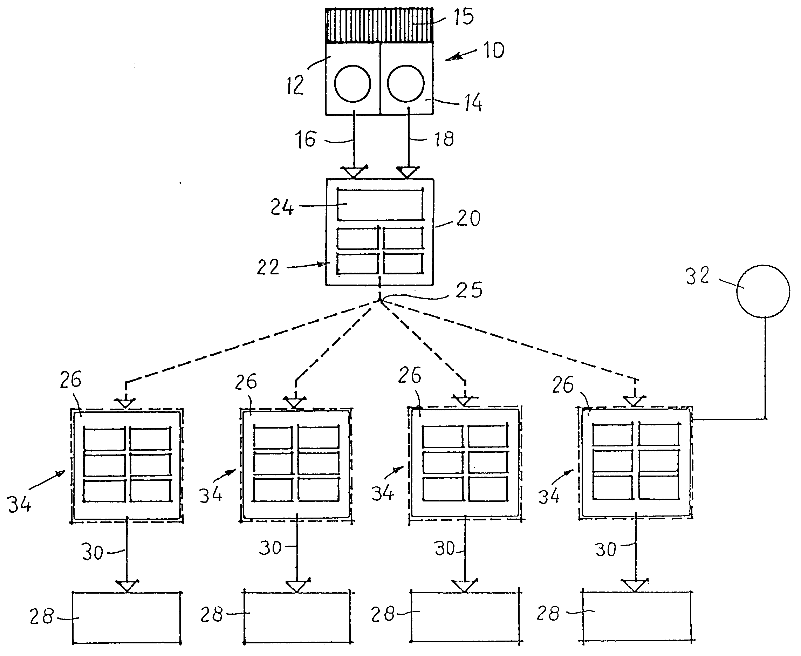

Nachfolgend wird anhand der Zeichnung, in der das Steuerungssystem in Form eines Blockschaltbildes dargestellt ist, ein Ausführungsbeispiel der Erfindung näher erläutert.

Das Steuerungssystem weist eine Helligkeits-Sensoranordnung 10 auf, die aus einem ersten Sensor 12 und einem zweiten Sensor 14 besteht und zusätzlich mit einer Solarzelle 15 versehen ist. Die beiden Sensoren 12,14 sind über die bei 16,18 angedeuteten Leitungen mit einer Schaltzeitenbegrenzungsvorrichtung 20 verbunden, die eine Mehrkanal-Zeitschaltuhr aufweist. Die Energie für die Schaltzeitenbegrenzungsvorrichtung 20 wird durch die Solarzelle 15 zur Verfügung gestellt. Sofern die Sensoren 12,14 Versorgungsenergie für ihren Betrieb benötigen, so geschieht dies ebenfalls durch die Solarzelle 15. Am ersten Sensor 12 ist eine erste Helligkeitsschwelle einstellbar, die den Mindestwert für die Morgendämmerung vorgibt, ab der der erste Sensor 12 ansprechen soll. Sobald die Helligkeit größer ist als dieser Morgendämmerungs-Mindestwert gibt der erste Sensor 12 über die Leitung 16 sein Ausgangssignal (erstes Ausgangssignal der Helligkeits-Sensoranordnung 10) aus. Am zweiten Sensor 14 ist eine (zweite) Helligkeitsschwelle einstellbar, die einen Wert für die Abenddämmerung vorgibt, bei deren Unterschreiten der zweite Sensor 14 über die Leitung 18 an die Schaltzeitenbegrenzungsvorrichtung 20 sein Ausgangssignal (zweites Ausgangssignal der Helligkeits-Sensoranordnung 10) ausgibt.

Die Schaltzeitenbegrenzungsvorrichtung 20 ist mit Tasten 22 zum Einstellen von Sperrzeiten und Sperrzeitspannen sowie mit einer Anzeige 24 versehen. Ferner weist die Schaltzeitenbegrenzungsvorrichtung 20 eine (nicht dargestellte) Sendevorrichtung zum Senden eines frequenzveränderbaren Funksignals 25 auf. Das Funksignal wird erzeugt und gesendet, sofern die Schaltzeitenbegrenzungsvorrichtung eines der Ausgangssignale der Helligkeits-Sensoranordnung 10 empfängt und weiter unter noch zu beschreibende Nebenbedingungen, die an der Schaltzeitenbegrenzungsvorrichtung einstellbar sind, erfüllt sind.

Das Funksignal der Schaltzeitenbegrenzungsvorrichtung 20 wird von (nicht dargestellten) Empfangsvorrichtungen empfangen, die in Verzögerungsvorrichtungen 26 integriert sind, die ihrerseits mit den elektrischen Antrieben 28 der Rolläden verbunden sind. Aufgabe der Verzögerungsvorrichtungen 26 ist es, die empfagenen Funksignale um einstellbare Verzögerungszeitspannen zeitlich verzögert in die Ansteuerungssignal für die elektrischen Antriebe 28 umzusetzen, mit denen sie über Leitungen 30 verbunden sind. Pro elektrischem Rolladenantrieb ist also eine Verzögerungsvorrichtung 26 vorgesehen, wobei andererseits nicht ausgeschlossen werden soll, daß mehrere elektrische Rolladenantriebe von einer Verzögerungsvorrichtung 26 angesteuert werden. Zusätzlich ist die Möglichkeit vorgesehen, an die Verzögerungsvorrichtungen 26 Sonnensensoren 32 anzuschließen. In der Zeichnung ist eine der Verzögerungsvorrichtungen 26 mit einem Sonnensensor 32 beschaltet.

Jede Verzögerungsvorrichtung 26 verfügt über Schalter 34 zum Einstellen der Verzögerungszeitspannen, zum Ein- und Ausschalten der Automatik-Steuerung und zum Auf- und Abfahren der Rolläden durch Schalterbetätigung von Hand.

Zur Funktionsweise des zuvor beschriebenen Steuerungssystems sei folgendes gesagt.

Die Helligkeits-Sensoranordnung 10 soll bei Sonnenaufgang bei vergleichsweise noch geringer Helligkeit ansprechen, während sie bei Sonnenuntergang bei noch relativ großer Helligkeit ansprechen soll. Die Sensoranordnung 10 sitzt an einer zentralen Stelle an der Außenwand des Hauses. Aufgrund der Stromversorgung durch die Solarzelle 15 beschränkt sich der Montageaufwand für die Helligkeits-Sensoranordnung 10 auf eine einzige entweder ein- oder zweiadrige Signalkabelverbindung mit der Schaltzeitenbegrenzungsvorrichtung 20. Die Stromversorgung für die Schaltzeitenbegrenzungsvorrichtung 20 kann ebenfalls über die Solarzelle 15 erfolgen.

In der Schaltzeitenbegrenzungsvorrichtung 20 werden Sperrzeiten und Sperrzeitspannen programmiert. Beispielsweise läßt sich die Schaltzeitenbegrenzungsvorrichtung 20 derart programmieren, daß, obwohl von dem ersten Sensor 12 der Helligkeits-Sensoranordnung 10 bereits das Ausgangssignal vorliegt, das Funksignal für die einzelnen Verzögerungsvorrichtungen 26 erst bei Erreichen der Sperrzeit erzeugt wird. Wenn beispielsweise im Sommer der erste Sensor 12 um 5.00 Uhr anspricht, kann durch entsprechende Programmierung der Sperrzeit auf 6.30 Uhr erreicht werden, daß das Funksignal erst zu diesem Zeitpunkt ausgegeben wird. Darüber hinaus besagt die Sperrzeitspanne, daß ab dem ersten Empfang des ersten Ausgangssignals für eine bestimmte Anzahl von Stunden (Sperrzeitspanne) kein weiteres erstes Signal von der Schaltzeitenbegrenzungsvorrichtung 20 in ein Funksignal umgesetzt wird. Dabei ist zu berücksichtigen, daß das auslösende Moment für die Sperrzeitspanne allein der Empfang des ersten Ausgangssignals sein kann. Durch die werkseitig auf 23 bis 23,5 Stunden eingestellte Sperrzeitspanne werden beispielsweise Schaltvorgänge bei Gewittern, sei es infolge von plötzlichen Helligkeiten durch Blitze oder plötzlichen Verdunkelungen durch Gewitterwolken, verhindert. Bei einer derart lang bemessenen Sperrzeitspanne sowohl was das Funksignal nach erstmaligem Empfang des ersten als auch des zweiten Ausgangssignals der Helligkeits-Sensoranordnung 10 angeht, ist gewährleistet, daß der erste Empfang des ersten bzw. zweiten Ausgangssignals der Helligkeits-Sensoranordnung 10 nach Ablauf der jeweiligen Sperrzeitspanne auf die Erkennung der Morgen- bzw. Abenddämmerung zurückzuführen ist.

Das von der Schaltzeitenbegrenzungsvorrichtung 20 ausgesandte Funksignal wird über die Verzögerungsvorrichtungen 26 erst nach der jeweils eingestellten Verzögerungszeit in den Schaltimpuls für den Rolladenantrieb umgesetzt. Dadurch ist es möglich, die Reihenfolge, in der die Rolläden auf- oder abfahren, zu bestimmen. Somit können Terrassentüren beispielsweise am Morgen als erstes geöffnet und am Abend später als die anderen Rolläden geschlossen werden bzw. als letztes geschlossen werden, womit ein Aussperren von sich noch außerhalb des Hauses befindenden Personen, die durch das Herablassen der Fensterrolläden entsprechend aufmerksam gemacht worden sind, zu verhindern.

Die Schaltzeitenbegrenzungsvorrichtung 20 verfügt über eine Umschaltmöglichkeit von Sommerzeit auf Winterzeit und umgekehrt. Zusätzlicher Komfort wird erreicht, indem die Schaltzeitenbegrenzungsvorrichtung bzw. deren Schaltzeituhr als Funkuhr die Sommerzeit- und Winterzeitumschaltung jeweils automatisch vornimmt.

## Patentansprüche

1. Vorrichtung zur automatischen Steuerung von Antrieben für insbesondere Rolläden, Jalousien o.dgl., mit
- einer Helligkeits-Sensoranordnung (10), die beim Überschreiten einer einstellbaren ersten Helligkeitsschwelle ein erstes Ausgangssignal und beim Unterschreiten einer einstellbaren zweiten Helligkeitsschwelle ein zweites Ausgangssignal ausgibt,
- einer die Ausgangssignale der Helligkeits-Sensoranordnung (10) empfangenden Schaltzeitenbegrenzungsvorrichtung (20), an der für mindestens ein Ausgangssignal der Helligkeits-Sensoranordnung (10) eine Sperrzeit und eine wiederholt ablaufende Sperrzeitspanne einstellbar sind, wobei die Schaltzeitenbegrenzungsvorrichtung (20) auf den nach Ablauf der vorherigen Sperrzeitspanne zeitlich ersten Empfang des ersten und/oder des zweiten Ausgangssignals der Helligkeits-Sensoranordnung (10) hin einmalig ein Ausgangssignal erzeugt, und zwar zeitlich nach der Sperrzeit, und wobei das Ausgangssignal der Schaltzeitenbegrenzungsvorrichtung (20) danach bis zum Ablauf der mit dem zeitlich ersten Empfang des ersten und/oder des zweiten Ausgangssignals der Helligkeits-Sensoranordnung (10) beginnenden Sperrzeitspanne unterdrückt ist, und
- mindestens einer das Ausgangssignal der Schaltzeitenbegrenzungsvorrichtung (20) empfangenden Verzögerungsvorrichtung (26) mit einstellbarer Verzögerungszeitspanne, die ihrerseits mit einem zu steuernden Antrieb (28) verbunden ist, wobei die Verzögerungsvorrichtung (26) auf den Empfang des Ausgangssignals der Schaltzeitenbegrenzungsvorrichtung (20) hin um die eingestellte Verzögerungszeitspanne zeitlich verzögert ein Ansteuerungssignal für den Antrieb (28) ausgibt.

2. Vorrichtung nach Anspruch 1, dadurch gekennzeichnet, daß die Helligkeits-Sensoranordnung (10) einen ersten Sensor (12) und einen zweiten Sensor (14) aufweist, wobei der erste Sensor (12) beim Überschreiten der ersten Helligkeitsschwelle das erste Ausgangssignal und der zweite Sensor (14) beim Überschreiten der zweiten Helligkeitsschwelle das zweite Ausgangssignal ausgibt.

3. Vorrichtung nach Anspruch 1 oder 2, dadurch gekennzeichnet, daß die Schaltzeitenbegrenzungsvorrichtung (20) eine Schaltuhranordnung aufweist, mit der
- für mindestens eines der beiden Ausgangssignale der Helligkeits-Sensoranordnung eine Sperrzeit einstellbar ist, ab der die Schaltzeitenbegrenzungsvorrichtung (20) auf den Empfang des betreffenden Ausgangssignals der Helligkeits-Sensoranordnung (10) ihr Ausgangssignal erzeugt,
und mit der
- für mindestens eines der beiden Ausgangssignale der Helligkeits-Sensoranordnung (10) eine Sperrzeitspanne einstellbar ist, für deren Dauer die Schaltzeitenbegrenzungsvorrichtung (20) nach dem ersten Empfang des betreffenden Ausgangssignals der Helligkeits-Sensoranordnung (10) auch beim nochmaligen oder fortdauernden Empfang des betreffenden Ausgangssignals der Helligkeits-Sensoranordnung (10) kein Ausgangssignal erzeugt wird.

4. Vorrichtung nach einem der Ansprüche 1 bis 3, dadurch gekennzeichnet, daß das Ausgangssignal der Schaltzeitenbegrenzungsvorrichtung (20) ein Funksignal ist, daß die Schaltzeitenbegrenzungsvorrichtung (20) eine Funksignal-Sendevorrichtung aufweist und daß die mindestens eine Verzögerungsvorrichtung (26) eine Empfangsvorrichtung zum Empfang des Funksignals aufweist.

5. Vorrichtung nach einem der Ansprüche 1 bis 4, dadurch gekennzeichnet, daß an der mindestens einen Verzögerungsvorrichtung (26) mehrere Verzögerungszeitspannen einstellbar sind.

6. Vorrichtung nach einem der Ansprüche 1 bis 5, dadurch gekennzeichnet, daß an der Schaltzeitenbegrenzungsvorrichtung (20) für mindestens eines der beiden Ausgangssignale der Helligkeits-Sensoranordnung (10) mehrere Sperrzeiten einstellbar sind.

7. Vorrichtung nach einem der Ansprüche 1 bis 6, dadurch gekennzeichnet, daß die mindestens eine Verzögerungsvorrichtung (26) einen Eingang für einen Sonnensensor (32) aufweist, der bei Überschreiten einer einstellbaren dritten Helligkeitsschwelle ein erstes Ausgangssignal an die Verzögerungsvorrichtung (26) ausgibt, die daraufhin ein Ansteuerungssignal zum Herunterfahren des Rolladens erzeugt, wobei der Sonnensensor (32) dann, wenn die Helligkeit für die Dauer einer voreinstellbaren Zeitspanne unterhalb der dritten Helligkeitsschwelle abgefallen ist, ein zweites Ausgangssignal an die Verzögerungsvorrichtung (26) ausgibt, die daraufhin ein Ansteuerungssignal zum Hochfahren des Rolladens erzeugt.
